# FASCICULE DE BREVET EUROPEEN

(11) **EP 1 510 455 B1**
(45) Date de publication et mention de la délivrance du brevet: **15.03.2006**
(21) Numéro de dépôt: 04291583.5
(22) Date de dépôt: 23.06.2004
(51) Int. Cl.: B64D 1/02, B64C 13/00

(54) **Procédé et dispositif pour contrôler l'assiette d'un avion**
Verfahren und Vorrichtung zur Trimmwinkelreglung eines Flugzeugs
Method and device for controlling the pitch angle of an aircraft

(30) Priorité: 26.08.2003 FR 0310161
(43) Date de publication de la demande: 02.03.2005
(73) Titulaire: AIRBUS France, 31060 Toulouse (FR)
(72) Inventeur: Chardon, Stéphane, 31500 Toulouse (FR); Sabathier, Jean-Philippe, 31300 Toulouse (FR)
(74) Mandataire: Hauer, Bernard

(56) Documents cités:
- GB-A- 2 292 998
- US-A- 3 618 878
- US-A- 4 261 537

## Description

La présente invention concerne un procédé et un dispositif pour contrôler l'assiette d'un avion, en particulier d'un avion de transport.

Bien que non exclusivement, la présente invention s'applique plus particulièrement au largage par gravité d'une charge qui est transportée dans une soute de l'avion. On sait que, pour mettre en oeuvre un tel largage, généralement :
- on ouvre une porte de ladite soute ; et
- on augmente l'angle d'inclinaison du plancher de la soute jusqu'à une valeur de consigne de manière à permettre, sous l'effet des forces de gravité, le glissement de la charge sur le plancher et sa chute hors de la soute à travers ladite porte. Ensuite, des parachutes qui sont attachés à la charge sont déployés pour déposer la charge au sol.

Un paramètre important pour un tel largage par gravité est l'angle d'inclinaison du plancher de la soute par rapport à l'horizontale. Cet angle d'inclinaison est lié à l'angle d'assiette de l'avion, lequel est égal à la somme des angles de pente et d'incidence. Pour que le largage se déroute correctement, l'angle d'inclinaison du plancher doit être supérieur à une valeur prédéterminée, par exemple sensiblement égale à 6° sur des avions de type "C130" ou "C160". Or, dans certaines configurations de vol, l'angle d'assiette de l'avion peut être tel que cet angle d'inclinaison reste inférieur à ladite valeur prédéterminée et donc insuffisant pour réaliser un tel largage par gravité.

On connaît plusieurs solutions qui permettent d'augmenter l'angle d'assiette de l'avion :
- rentrer les volets pour augmenter l'incidence et donc l'assiette. Toutefois, pour une vitesse donnée de l'avion, cette solution a pour effet de rapprocher l'angle d'incidence de l'avion de l'angle d'incidence correspondant au décrochage et, par conséquent, elle ne peut être envisagée que si la marge par rapport au décrochage reste suffisante eu égard aux normes en vigueur ;
- larguer la charge en montée. A vitesse constante, cela permet d'augmenter la pente et, par conséquent, l'assiette de l'avion. Toutefois, par définition, cette solution ne peut être envisagée pour un largage à altitude constante ;
- larguer la charge sous facteur de charge. Cela permet d'augmenter l'incidence et provoque de plus une montée de l'avion. Il en résulte une augmentation de l'angle d'assiette de l'avion. Toutefois, dans ce cas, l'avion ne vole pas à altitude constante, puisqu'il est en montée ;
- augmenter l'angle de calage du plancher de l'avion par rapport à son axe longitudinal. Toutefois, cela n'est pas toujours possible, notamment en raison de la géométrie de l'avion. De plus, il peut en résulter une perte de place disponible dans la soute de l'avion et/ou une diminution du confort des passagers lorsque l'avion est également utilisé, par exemple, pour le transport de personnels.

Par conséquent, les différentes solutions connues précitées ne permettent pas, au moins dans certaines configurations de vol de l'avion, de réaliser un largage par gravité à vitesse et altitude constantes.

La présente invention a pour objet de remédier à ces inconvénients. Elle concerne un procédé pour contrôler l'assiette d'un avion, quelles que soient les conditions et les configurations de vol, et notamment en vol à vitesse constante et à altitude constante.

A cet effet, selon l'invention, ledit procédé pour contrôler l'assiette d'un avion, ledit avion comportant des spoilers qui sont agencés sur les ailes et dont les positions angulaires respectives peuvent être réglées par des actionneurs commandables,
est remarquable en ce que :
a) on détermine une assiette de consigne de l'avion correspondant à une assiette que l'avion doit atteindre ;
b) on calcule des positions de consigne desdits spoilers, correspondant à des positions angulaires particulières (de braquage) desdits spoilers, permettant d'amener l'avion à ladite assiette de consigne ;
c) on calcule des ordres de commande desdits actionneurs commandables, permettant d'amener lesdits spoilers dans lesdites positions de consigne ; et
d) on applique lesdits ordres de commande auxdits actionneurs desdits spoilers.

Ainsi, grâce à l'invention, on peut amener rapidement et facilement l'avion à une assiette de consigne particulière, et ceci quelles que soient les conditions et les configurations de vol, et donc notamment à une assiette de consigne permettant un largage par gravité d'une charge de l'avion. De plus, le coût est réduit, puisque la mise en oeuvre de la présente invention ne nécessite généralement aucune modification structurelle de l'avion. Les spoilers que l'on utilise sont en effet, généralement, déjà présents sur l'avion.

De façon avantageuse, on réalise, de plus, les opérations suivantes :
e1) on détermine, pour lesdites positions de consigne des spoilers, au moins une relation entre la portance de l'avion et l'angle d'incidence de l'avion ; et
e2) lors de l'application desdits ordres de commande auxdits actionneurs des spoilers, on augmente l'angle d'incidence de l'avion de manière à compenser la réduction de la portance de l'avion, due à ladite application desdits ordres de commande, pour maintenir sensiblement constante ladite portance de l'avion.

Dans un mode de réalisation particulier, on réalise, de plus, les opérations suivantes :
f1) on mesure l'angle d'incidence de l'avion ;
f2) on compare la valeur mesurée de l'angle d'incidence à une valeur prédéterminée ; et
f3) lorsque ladite valeur mesurée dépasse ladite valeur prédéterminée, on applique de façon automatique et prioritaire des ordres de commande de rentrée auxdits actionneurs pour qu'ils rentrent automatiquement lesdits spoilers.

Dans une première variante de mise en oeuvre, lesdites étapes a) à c) sont mises en oeuvre de façon automatique par des moyens de l'avion, et ladite étape d) est déclenchée par une action d'un pilote de l'avion.

Dans une seconde variante de mise en oeuvre, lesdites étapes a) à c) sont mises en oeuvre de façon automatique par des moyens de l'avion, et ladite étape d) est déclenchée de façon automatique, lorsque l'avion passe dans une configuration particulière. Dans ce cas, de préférence, un pilote de l'avion est en mesure d'ajuster si nécessaire les positions angulaires desdits spoilers.

En outre, avantageusement, on réalise de plus, de façon automatique, un asservissement de l'angle d'assiette de l'avion, par l'intermédiaire d'un ajustement des positions angulaires desdits spoilers.

Une application préférée dudit procédé conforme à l'invention de contrôle d'assiette, concerne un procédé de largage par gravité d'au moins une charge qui est transportée dans une soute d'un avion, procédé selon lequel :
A/ on ouvre une porte de ladite soute ; et
B/ on augmente l'angle d'inclinaison du plancher de la soute jusqu'à une valeur de consigne de manière à permettre, sous l'effet des forces de gravité, le glissement de la charge sur ledit plancher et sa chute hors de la soute à travers ladite porte.

Selon l'invention, pour contrôler dans ce cas l'angle d'inclinaison du plancher de la soute, on contrôle l'assiette de l'avion, et ceci en mettant en oeuvre le procédé de contrôle d'assiette décrit précédemment.

De façon avantageuse, on calcule lesdites positions de consigne desdits spoilers, en fonction de paramètres qui sont représentatifs dudit largage.

La présente invention concerne également un dispositif pour contrôler l'assiette d'un avion, en particulier d'un avion de transport.

Selon l'invention, ledit dispositif est remarquable en ce qu'il comporte :
- des spoilers qui sont agencés sur les ailes de l'avion, et dont les positions angulaires respectives peuvent être réglées par des actionneurs commandables ;
- des moyens pour déterminer une assiette de consigne de l'avion correspondant à une assiette que l'avion doit atteindre ;
- des moyens pour calculer des positions de consigne desdits spoilers, correspondant à des positions angulaires particulières (de braquage) desdits spoilers, permettant d'amener l'avion à ladite assiette de consigne ; et
- des moyens pour calculer des ordres de commande desdits actionneurs commandables, permettant d'amener lesdits spoilers dans lesdites positions de consigne, lesdits ordres de commande étant appliqués auxdits actionneurs desdits spoilers.

Les figures du dessin annexé feront bien comprendre comment l'invention peut être réalisée. Sur ces figures, des références identiques désignent des éléments semblables.

La figure 1 est le schéma synoptique d'un dispositif de contrôle d'assiette conforme à l'invention.

La figure 2 illustre schématiquement un avion, auquel on applique un dispositif de contrôle d'assiette conforme à l'invention, dans le but de larguer une charge transportée.

La figure 3 est un graphique permettant d'expliquer une caractéristique particulière de l'invention.

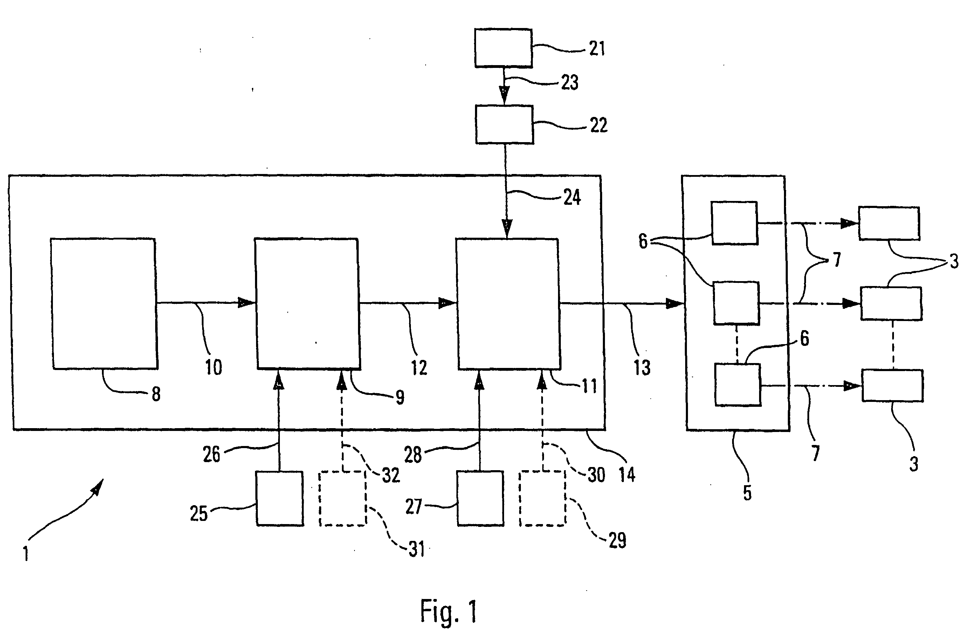

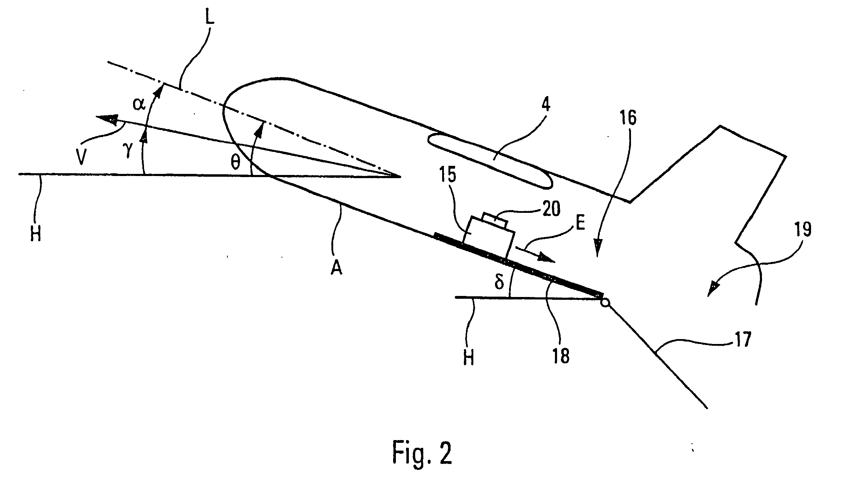

Le dispositif 1 conforme à l'invention et représenté schématiquement sur la figure 1 est destiné à contrôler l'assiette θ d'un avion A représenté partiellement à titre d'illustration sur la figure 2.

Selon l'invention, ledit dispositif 1 comporte :
- des spoilers 3 de type usuel, qui sont agencés sur les ailes 4 de l'avion A, et dont les positions angulaires respectives peuvent être réglées par un ensemble 5 d'actionneurs commandables 6 usuels, comme illustré par des liaisons 7 en traits mixtes ;
- des moyens 8 pour déterminer une assiette de consigne de l'avion A correspondant à une assiette (ou angle d'assiette) que l'avion A doit atteindre ;
- des moyens 9 qui sont reliés par une liaison 10 aux moyens 8, pour calculer des positions de consigne desdits spoilers 3, correspondant à des positions angulaires (c'est-à-dire des positions ou angles de braquage) particulières desdits spoilers 3, permettant d'amener l'avion A à ladite assiette de consigne ; et
- des moyens 11 qui sont reliés par une liaison 12 aux moyens 9, pour calculer des ordres de commande desdits actionneurs commandables 6, permettant d'amener lesdits spoilers 3 dans lesdites positions de consigne. Lesdits ordres de commande sont transmis audit ensemble 5 d'actionneurs 6, par l'intermédiaire d'une liaison 13.

Lesdits moyens 8, 9 et 11 peuvent être regroupés dans une unité centrale 14.

Dans le cadre de la présente invention, on utilise des spoilers 3 (qui sont des dispositifs connus), de telle manière à ce qu'ils mettent en oeuvre une nouvelle fonction. En effet, on sait que, usuellement, les spoilers 3 sont utilisés de différentes manières sur un avion A, mais pas de la manière conforme à l'invention décrite précédemment. En particulier, braqués dissymétriquement, les spoilers 3 servent à générer du roulis et, braqués symétriquement, ils permettent de ralentir l'avion A (aérofreins), de réduire les charges sur la voilure 4 sous facteur de charge ou turbulences, ou de plaquer l'avion A au sol et d'améliorer l'efficacité du freinage ("ground spoilers"). Dans le cadre de la présente invention, comme indiqué précédemment, on utilise les spoilers 3 pour modifier et contrôler l'assiette de l'avion A.

Une application préférée du dispositif 1 conforme à l'invention concerne le largage par gravité d'une charge 15 qui est transportée dans une soute 16 de l'avion A, comme représenté schématiquement sur la figure 2.

Pour mettre en oeuvre un tel largage par gravité :
A/ on ouvre une porte 17 de ladite soute 16, à l'arrière de l'avion A ; et
B/ on augmente l'angle d'inclinaison δ du plancher 18 de la soute 16 sur lequel repose la charge 15, par rapport à l'horizontale H, jusqu'à une valeur de consigne de manière à permettre, sous l'effet des forces de gravité, le glissement de la charge 15 sur le plancher 18 et son éjection hors de la soute 16 à travers une ouverture 19 créée, à l'arrière de l'avion A, par l'ouverture de ladite porte 17.

Un ou plusieurs parachutes 20 qui sont attachés à la charge 15 sont déployés après la sortie de l'avion A et déposent la charge 15 au sol.

Selon l'invention, par le contrôle de l'assiette θ de l'avion A, ledit dispositif 1 est en mesure de contrôler l'angle d'inclinaison δ du plancher 18 par rapport à l'horizontale H, et donc de commander et contrôler le largage de la charge 15.

On sait que l'angle d'inclinaison δ est égal à la somme de l'angle d'assiette θ (défini comme l'angle entre l'horizontale H et l'axe longitudinal L de l'avion A) et de l'angle de calage du plancher 18 par rapport audit axe longitudinal L. Par conséquent, lorsque cet angle de calage est nul, c'est-à-dire lorsque le plancher 18 est parallèle à l'axe longitudinal L de l'avion A, ledit angle d'inclinaison δ est égal à l'angle d'assiette θ qui correspond à la somme des angles de pente γ et d'incidence α (définis par rapport au vecteur vitesse V de l'avion A).

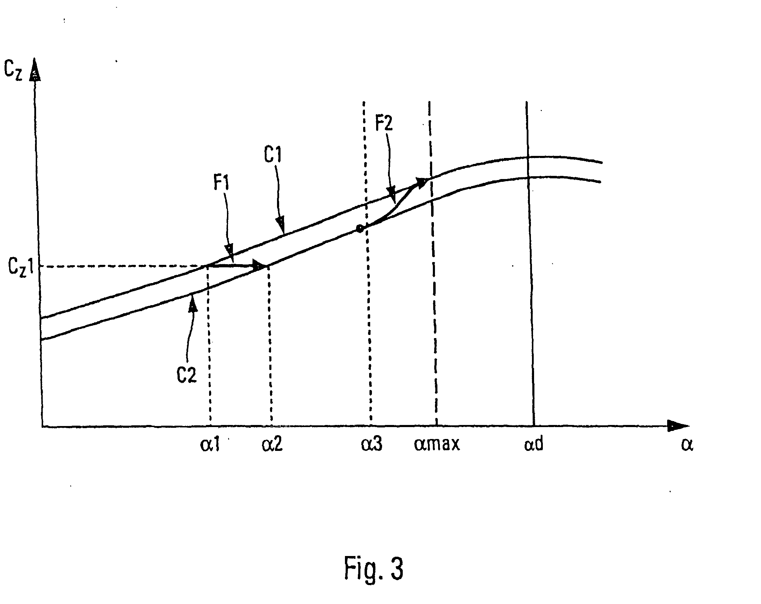

Dans le cas où l'on souhaite réaliser un largage lors d'un vol en palier (altitude constante) à vitesse constante et à facteur de charge égal à 1 (vol en palier et pas de virage), il résulte de l'équation de sustentation usuelle de l'avion A que la portance Cz doit rester constante. Or, un braquage en vol des spoilers 3 a pour conséquence de diminuer ladite portance Cz. Selon l'invention, pour compenser cette diminution de la portance Cz, on augmente l'angle d'incidence α, comme illustré sur la figure 3. Cette figure 3 montre deux courbes C1 et C2 relatives à deux angles de braquage particuliers différents des spoilers 3, l'angle de braquage de C2 étant plus important que celui de C1, et représentant la portance Cz en fonction de l'incidence α. Par exemple, en augmentant le braquage des spoilers 3 pour passer du braquage de C1 à celui de C2, il suffit, pour garder la portance constante, par exemple à une valeur Cz1, d'augmenter l'incidence de α1 à α2, comme illustré par une flèche F1.

Le fait de pouvoir réaliser un largage dans les conditions décrites ci-dessus [vitesse constante, accélération nulle (car facteur de charge égal à 1), assiette fixe, ...] permet d'obtenir une bonne précision du largage et donc une bonne répétitibilité de celui-ci. De plus, le fait d'agir seulement sur la position des spoilers 3 pour mettre en oeuvre l'invention est aussi avantageux, car aucune modification structurelle de l'avion A n'est nécessaire, puisque les spoilers 3 existent déjà en général sur l'avion A, pour mettre en oeuvre d'autres fonctions connues, comme indiqué précédemment.

Dans un mode de réalisation préféré de l'invention, on procède à une rentrée automatique des spoilers 3, dès que l'angle d'incidence α devient supérieur à une valeur prédéterminée α3, par exemple lors de la traversée d'une zone de turbulences ou lors de manoeuvres d'évitement ou de dégagement nécessitant l'application d'un facteur de charge. Le mouvement de rentrée des spoilers 3 est suffisamment rapide pour permettre de ne pas dégrader la marge d'angle d'incidence par rapport à une valeur αd correspondant au décrochage. En pratique, l'angle d'incidence α doit rester inférieur à une valeur maximale αmax qui est inférieure à la valeur αd. En effet, la rentrée des spoilers 3 permet de diminuer l'angle d'incidence (pour une portance Cz constante) à la valeur qui était la sienne avant le début du largage.

Pour ce faire, le dispositif 1 comporte, comme représenté sur la figure 1 :
- un moyen 21 pour mesurer l'angle d'incidence α de l'avion A ;
- un moyen 22 qui est relié par une liaison 23 au moyen 21, pour comparer la valeur mesurée de l'angle d'incidence à ladite valeur prédéterminée α3 ; et
- lesdits moyens 11 qui sont reliés par une liaison 24 au moyen 22 et qui sont formés pour, lorsque ladite valeur mesurée dépasse ladite valeur prédéterminée α3, appliquer de façon automatique et prioritaire des ordres de commande de rentrée auxdits actionneurs 6 pour qu'ils rentrent automatiquement lesdits spoilers 3.

Sur la figure 3, on a représenté, à titre d'exemple, une flèche F2 illustrant la rentrée automatique des spoilers 3 d'un angle de braquage initial (par exemple 5°) relatif à la courbe C2 à l'angle (en l'occurrence 0°) relatif à la courbe C1 qui dans ce cas correspond à la rentrée complète des spoilers 3.

On notera par ailleurs qu'avec la solution usuelle précitée utilisant des volets de l'avion et consistant à rentrer les volets pour augmenter l'incidence, il n'est pas envisageable de ressortir automatiquement lesdits volets en cas de réduction de la marge d'incidence, car la cinématique desdits volets n'est pas suffisamment rapide pour garantir le rétablissement d'une marge d'incidence compatible avec les valeurs maximales précitées. Il en est tout autre pour la commande des spoilers 3.

Dans un mode de réalisation particulier, lesdits moyens 9, par exemple un système existant déjà sur l'avion A, calculent automatiquement les positions de consigne des spoilers 3, en fonction de paramètres qui sont représentatifs du largage envisagé, tels que la masse, le centrage, la vitesse et/ou l'altitude de l'avion A au moment du largage. Ces paramètres sont reçus par les moyens 9 à partir de sources d'informations usuelles 25 par l'intermédiaire d'une liaison 26.

Dans un premier mode de réalisation, le braquage des spoilers 3, dont les positions de consigne sont calculées automatiquement comme précité, est déclenché par une action manuelle d'un pilote de l'avion A sur un moyen approprié 27 qui est, par exemple, relié par une liaison 28 aux moyens 11.

Dans un autre mode de réalisation de l'invention, le braquage (ou les positions de consigne) des spoilers 3 est calculé comme dans ledit premier mode de réalisation, mais il est déclenché de façon automatique par des moyens appropriés 29 (reliés par une liaison 30 aux moyens 11 et représentés en traits interrompus) lorsque l'avion A passe en configuration de largage. On considère, par exemple, que l'avion A est en configuration de largage, lorsque la porte 17 de la soute 16 est ouverte. Les moyens 29 sont réalisés pour être en mesure de détecter une telle ouverture de la porte 17. De plus, si nécessaire, le pilote peut alors ajuster la position des spoilers 3 et donc la valeur de l'angle d'assiette, par exemple à l'aide des moyens 27.

Dans un autre mode de réalisation, le braquage des spoilers 3 est également mis en oeuvre de façon automatique et, de plus, un asservissement de l'angle d'assiette est réalisé de façon automatique en agissant sur la position des spoilers 3. Par exemple, un capteur 31 mesure la valeur effective de l'angle d'assiette qui est envoyée auxdits moyens 9 par une liaison 32, lesquels calculent une correction de la position de consigne des spoilers 3 pour obtenir ladite assiette de consigne.

## Revendications

1. Procédé pour contrôler l'assiette (θ) d'un avion (A), ledit avion (A) comportant des spoilers (3) qui sont agencés sur les ailes (4), et dont les positions angulaires respectives peuvent être réglées par des actionneurs commandables (6), procédé selon lequel, à une étape d), on applique des ordres de commande auxdits actionneurs (6) desdits spoilers (3),
**caractérisé en ce que**, antérieurement à l'étape d) :
a) on détermine une assiette de consigne de l'avion (A) correspondant à une assiette (θ) que l'avion (A) doit atteindre ;
b) on calcule des positions de consigne desdits spoilers (3), correspondant à des positions angulaires particulières desdits spoilers (3), permettant d'amener l'avion (A) à ladite assiette de consigne ; et
c) on calcule des ordres de commande desdits actionneurs commandables (6), permettant d'amener lesdits spoilers (3) dans lesdites positions de consigne.

2. Procédé selon la revendication 1,
**caractérisé en ce que** l'on réalise, de plus, les opérations suivantes :
e1) on détermine, pour lesdites positions de consigne des spoilers (3), au moins une relation entre la portance (Cz) de l'avion (A) et l'angle d'incidence (α) de l'avion (A) ; et
e2) lors de l'application desdits ordres de commande auxdits actionneurs (6) des spoilers (3), on augmente l'angle d'incidence (α) de l'avion (A) de manière à compenser la réduction de la portance (Cz) de l'avion (A), due à ladite application desdits ordres de commande, pour maintenir sensiblement constante ladite portance (Cz) de l'avion (A).

3. Procédé selon l'une des revendications 1 et 2,
**caractérisé en ce que** l'on réalise, de plus, les opérations suivantes :
f1) on mesure l'angle d'incidence (α) de l'avion (A) ;
f2) on compare la valeur mesurée de l'angle d'incidence (α) à une valeur prédéterminée (α3) ; et
f3) lorsque ladite valeur mesurée dépasse ladite valeur prédéterminée (α3), on applique de façon automatique et prioritaire des ordres de commande de rentrée auxdits actionneurs (6) pour qu'ils rentrent automatiquement lesdits spoilers (3).

4. Procédé selon l'une quelconque des revendications 1 à 3,
**caractérisé en ce que** lesdites étapes a) à c) sont mises en oeuvre de façon automatique par des moyens (14) de l'avion (A), et ladite étape d) est déclenchée par une action d'un pilote de l'avion (A).

5. Procédé selon l'une quelconque des revendications 1 à 3,
**caractérisé en ce que** lesdites étapes a) à c) sont mises en oeuvre de façon automatique par des moyens (14) de l'avion (A), et ladite étape d) est déclenchée de façon automatique, lorsque l'avion (A) passe dans une configuration particulière.

6. Procédé selon la revendication 5,
**caractérisé en ce qu'**un pilote de l'avion (A) ajuste si nécessaire les positions angulaires desdits spoilers (3).

7. Procédé selon la revendication 5,
**caractérisé en ce que** l'on réalise, de plus, de façon automatique un asservissement de l'angle d'assiette (θ) de l'avion (A), par l'intermédiaire d'un ajustement des positions angulaires desdits spoilers (3).

8. Procédé de largage par gravité d'au moins une charge (15) qui est transportée dans une soute (16) d'un avion (A), procédé selon lequel :
A/ on ouvre une porte (17) de ladite soute (16) ; et
B/ on augmente l'angle d'inclinaison (δ) du plancher (18) de la soute (16) jusqu'à une valeur de consigne de manière à permettre, sous l'effet des forces de gravité, le glissement de la charge (15) sur ledit plancher (18) et sa chute hors de la soute (16) à travers ladite porte (17),
**caractérisé en ce que**, pour contrôler l'angle d'inclinaison (δ) du plancher (18) de la soute (16), on contrôle l'assiette (θ) de l'avion (A), en mettant en oeuvre le procédé spécifié sous l'une quelconque des revendications 1 à 7.

9. Procédé selon la revendication 8,
**caractérisé en ce que** l'on calcule lesdites positions de consigne desdits spoilers (3), en fonction de paramètres qui sont représentatifs dudit largage.

10. Dispositif pour contrôler l'assiette (θ) d'un avion (A), ledit dispositif (1) comportant :
- des spoilers (3) qui sont agencés sur les ailes (4) de l'avion (A), et dont les positions angulaires respectives peuvent être réglées par des actionneurs commandables (6) ; et
- des moyens (11) pour appliquer des ordres de commande auxdits actionneurs (6) desdits spoilers (3),
**caractérisé en ce qu'**il comporte de plus :
- des moyens (8) pour déterminer une assiette de consigne de l'avion (A) correspondant à une assiette (θ) que l'avion (A) doit atteindre ;
- des moyens (9) pour calculer des positions de consigne desdits spoilers (3), correspondant à des positions angulaires particulières desdits spoilers (3), permettant d'amener l'avion (A) à ladite assiette de consigne ; et
- des moyens (11) pour calculer des ordres de commande desdits actionneurs commandables (6), permettant d'amener lesdits spoilers (3) dans lesdites positions de consigne.

11. Avion,
**caractérisé en ce qu'**il comporte un dispositif (1) tel que celui spécifié sous la revendication 10.

## Claims

1. Method for controlling the attitude (θ) of an aircraft (A), the said aircraft (A) comprising spoilers (3) that are arranged on the wings (4) and whose respective angular positions can be adjusted by controllable actuators (6), according to which method, at a step d), control instructions are applied to the said actuators (6) of the said spoilers (3) **characterized in that**, prior to step d):
a) a command attitude of the aircraft (A) is determined corresponding to an attitude (θ) that the aircraft (A) must achieve;
b) command positions of the said spoilers (3) are calculated, corresponding to particular angular positions of the said spoilers (3), making it possible to bring the aircraft (A) to the said command attitude; and
c) control instructions for the said controllable actuators (6) are calculated, making it possible to bring the said spoilers (3) into the said command positions.

2. Method according to Claim 1, **characterized in that** the following operations are also carried out:
e1) there is determined, for each of the said command positions of the spoilers (3), at least one relationship between the lift (Cz) of the aircraft (A) and the angle of incidence (α) of the aircraft (A); and
e2) during the application of the said control instructions to the said actuators (6) of the spoilers (3), the angle of incidence (α) of the aircraft (A) is increased in such a way as to compensate for the reduction in the lift (Cz) of the aircraft (A), due to the said application of the said control instructions, in order to maintain the said lift (Cz) of the aircraft (A) substantially constant.

3. Method according to either of Claims 1 and 2, **characterized in that** the following operations are also carried out:
f1) the angle of incidence (α) of the aircraft (A) is measured;
f2) the measured value of the angle of incidence (α) is compared with a predetermined value (α3); and
f3) when the said measured value exceeds the said predetermined value (α3), retraction control instructions are applied automatically and by priority to the said actuators (6) in order that they automatically retract the said spoilers (3).

4. Method according to any one of Claims 1 to 3, **characterized in that** the said steps a) to c) are implemented automatically by means (14) of the aircraft (A) and the said step d) is initiated by an action by a pilot of the aircraft (A).

5. Method according to any one of Claims 1 to 3, **characterized in that** the said steps a) to c) are implemented automatically by means (14) of the aircraft (A) and the said step d) is initiated automatically, when the aircraft (A) passes into a particular configuration.

6. Method according to Claim 5, **characterized in that** a pilot of the aircraft (A) adjusts, if necessary, the angular positions of the said spoilers (3).

7. Method according to Claim 5, **characterized in that** there is additionally carried out, in an automatic manner, a servo-control of the attitude angle (θ) of the aircraft (A), by the intermediary of an adjustment of the angular positions of the said spoilers (3).

8. Method of dropping by gravity at least one load (15) which is transported in a hold (16) of an aircraft (A), a method according to which:
A/ a door (17) of the said hold (16) is opened; and
B/ the angle of inclination (δ) of the floor (18) of the hold (16) is increased up to a command value in order to allow, under the effect of gravitational forces, the sliding of the load (15) over the said floor (18) and its falling out of the hold (16) through the said door (17),
**characterized in that**, in order to control the angle of inclination (δ) of the floor (18) of the hold (16), the attitude (θ) of the aircraft (A) is controlled, by implementing the method as claimed in any one of Claims 1 to 7.

9. Method according to Claim 8, **characterized in that** the said command positions of the said spoilers (3) are calculated according to parameters which are representative of the said drop.

10. Device for controlling the attitude (θ) of an aircraft (A), the said device (1) comprising:
- spoilers (3) that are arranged on the wings (4) of the aircraft (A) and whose respective angular positions can be adjusted by controllable actuators (6); and
- means (11) for applying control instructions to the said actuators (6) of the said spoilers (3),
**characterized in that** it further comprises:
- means (8) for determining a command attitude of the aircraft (A) corresponding to an attitude (θ) that the aircraft (A) must achieve;
- means (9) for calculating the command positions of the said spoilers (3), corresponding to particular angular positions of the said spoilers (3), making it possible to bring the aircraft (A) to the said command attitude; and
- means (11) for calculating control instructions for the said controllable actuators (6), making it possible to bring the said spoilers (3) into the said command positions.

11. Aircraft, **characterized in that** it comprises a device (1) as claimed in Claim 10.

## Patentansprüche

1. Verfahren zum Kontrollieren des Trimmwinkels (θ) eines Flugzeugs (A), wobei das Flugzeug (A) Luftleitbleche (3) aufweist, die auf den Tragflächen (4) angeordnet sind, und deren jeweilige Winkelstellungen durch ansteuerbare Wirkelemente (6) reguliert werden können, bei welchem an einem Schritt d) Steuerbefehle an den Wirkelemente (6) der Luftleitbleche (3) angewendet werden, **dadurch gekennzeichnet, dass** vor dem Schritt d):
a) eine Solltrimmung des Flugzeugs (A) entsprechend einem Trimmwinkel (θ) bestimmt wird, den das Flugzeug (A) erreichen muss;
b) Solistellungen der Luftleitbleche (3) entsprechend der speziellen Winkelstellungen der Luftleitbleche (3) berechnet werden, die es ermöglichen, das Flugzeug (A) auf die Solltrimmung zu bringen; und
c) Steuerbefehle für die ansteuerbaren Wirkelemente (6) berechnet werden, die es ermöglichen, die Luftleitbleche (3) in die Sollstellungen zu bringen.

2. Verfahren nach Anspruch 1,
**dadurch gekennzeichnet, dass** ferner die folgenden Vorgänge ausgeführt werden:
e1) es wird für die Sollstellungen der Luftleitbleche (3) wenigstens eine Beziehung zwischen dem Auftrieb (Cz) des Flugzeugs (A) und dem Anstellwinkel (α) des Flugzeugs (A) bestimmt; und
e2) bei der Anwendung der Steuerbefehle an den Wirkelementen (6) der Luftleitbleche (3) wird der Anstellwinkel (α) des Flugzeugs (A) derart vergrößert, dass die Reduktion des Auftriebs (Cz) des Flugzeugs (A) aufgrund der Anwendung der Steuerbefehle kompensiert wird, um einen im Wesentlichen konstanten Auftrieb (Cz) des Flugzeugs (A) beizubehalten.

3. Verfahren nach einem der Ansprüche 1 und 2,
**dadurch gekennzeichnet, dass** ferner die folgenden Vorgänge durchgeführt werden:
f1) es wird der Anstellwinkel (α) des Flugzeugs (A) gemessen;
f2) es wird der gemessene Wert des Anstellwinkels (α) mit einem vorbestimmten Wert (α3) verglichen; und
f3) wenn der gemessene Wert über den vorbestimmten Wert (α3) steigt, werden Einfahr-Steuerbefehle automatisch und vorrangig an den Wirkelementen (6) angewendet, damit diese die Luftleitbleche (3) automatisch einfahren.

4. Verfahren nach einem der Ansprüche 1 bis 3,
**dadurch gekennzeichnet, dass** die Schritte a) bis c) automatisch von Einrichtungen (14) des Flugzeugs (A) durchgeführt werden und der Schritt d) durch eine Aktion des Piloten des Flugzeugs (A) ausgelöst wird.

5. Verfahren nach einem der Ansprüche 1 bis 3,
**dadurch gekennzeichnet, dass** die Schritte a) bis c) automatisch durch Einrichtungen (14) des Flugzeugs (A) durchgeführt werden und der Schritt d) automatisch ausgelöst wird, wenn das Flugzeug (A) in eine spezielle Konfiguration gerät.

6. Verfahren nach Anspruch 5,
**dadurch gekennzeichnet, dass** ein Pilot des Flugzeugs (A) die Winkelstellungen der Luftleitbleche (3) bedarfsweise einstellt.

7. Verfahren nach Anspruch 5,
**dadurch gekennzeichnet, dass** ferner automatisch eine Regelung des Trimmwinkels (θ) des Flugzeugs (A) mithilfe einer Einstellung der Winkelstellungen der Luftleitbleche (3) durchgeführt wird.

8. Verfahren zum Abwurf mittels Schwerkraft wenigstens einer Ladung (15), die in einem Laderaum (16) eines Flugzeugs (A) transportiert wird, in welchem:
A/ eine Luke (17) des Laderaumes (16) geöffnet wird; und
B/ ein Neigungswinkel (δ) des Bodens (18) des Laderaumes (16) vergrößert wird, bis ein Sollwert erreicht wird, derart, dass unter dem Einfluss von Schwerkräften das Gleiten der Ladung (15) auf dem Boden (18) und ihr Sturz aus dem Laderaum (16) durch die Luke (17) hindurch möglich wird,
**dadurch gekennzeichnet, dass** um den Neigungswinkel (δ) des Bodens (18) des Laderaumes (16) zu kontrollieren, der Trimmwinkel (θ) des Flugzeugs (A) kontrolliert wird, indem das nach einem Ansprüche 1 bis 7 angegebene Verfahren durchgeführt wird.

9. Verfahren nach Anspruch 8,
**dadurch gekennzeichnet, dass** die Sollstellungen der Luftleitbleche (3) in Abhängigkeit von Parametern berechnet werden, die für den Abwurf repräsentativ sind.

10. Vorrichtung zum Kontrollieren des Trimmwinkels (θ) eines Flugzeugs (A), wobei die Vorrichtung (1) umfasst:
• Luftleitbleche (3), die auf den Tragflächen (4) des Flugzeugs (A) angeordnet sind und deren jeweilige Winkelstellungen durch ansteuerbare Wirkelemente (6) reguliert werden können; und
• Einrichtungen (11), um Steuerbefehle an den Wirkelementen (6) der Luftleitbleche (3) anzuwenden,
**dadurch gekennzeichnet, dass** diese ferner umfasst:
• Einrichtungen (8), um eine Solltrimmung des Flugzeugs (A) entsprechend eines Trimmwinkels (θ) zu bestimmen, den das Flugzeug (A) erreichen muss;
• Einrichtungen (9), um die Sollstellungen der Luftleitbleche (3) entsprechend der speziellen Winkelstellungen der Luftleitbleche (3) zu berechnen, was ermöglicht, das Flugzeug (A) auf die Solltrimmung zu bringen; und
• Einrichtungen (11), um Steuerbefehle der ansteuerbaren Wirkelemente (6) zu berechnen, was ermöglicht, die Luftleitbleche (3) in die Sollstellungen zu bringen.

11. Flugzeug,
**dadurch gekennzeichnet, dass** dieses eine Vorrichtung (1) umfasst, wie sie im Anspruch 10 angegeben ist.
